# EUROPÄISCHE PATENTSCHRIFT

(11) **EP 2 390 038 B1**
(45) Veröffentlichungstag und Bekanntmachung des Hinweises auf die Patenterteilung: **12.07.2017**
(21) Anmeldenummer: 11004242.1
(22) Anmeldetag: 23.05.2011
(51) Int. Cl.: B23K 3/03, B23K 3/02

(54) **Lötsystem**
Soldering system
Système de brasage

(30) Priorität: 26.05.2010 DE 202010007241 U
(43) Veröffentlichungstag der Anmeldung: 30.11.2011
(73) Patentinhaber: Apex Brands, Inc., Apex, NC 27539 (US)
(72) Erfinder: Möhl, Michael, 74392 Freudental (DE); Zerweck, Ralf, 74357 Bönnigheim (DE)
(74) Vertreter: Grünecker Patent- und Rechtsanwälte PartG mbB

(56) Entgegenhaltungen:
- EP-A1- 2 196 277
- EP-A2- 0 984 388
- EP-A2- 1 841 188
- DE-T5-112004 001 052
- DE-U1- 9 005 890
- DE-U1-202004 016 921
- FR-A1- 2 839 667
- FR-A1- 2 917 514
- US-A- 5 495 093
- US-A- 6 103 994

## Beschreibung

Die Erfindung bezieht sich auf ein Lötsystem gemäß dem Oberbegriff des Anspruchs 1.

In der Praxis ist das Lötverfahren eine gängige Technik, um Metallteile durch eine Metalllegierung unter Einfluss von Wärme beziehungsweise Hitze zu verbinden. Dabei erreicht die Metalllegierung, auch Lot bezeichnet, eine Schmelztemperatur, die unterhalb der Schmelztemperatur der zu verbindenden Metallteile liegt. Beim Löten fließt das geschmolzene Lot zwischen die beiden Metallteile, wobei es unter günstigen Voraussetzungen zu einer festen, dichten, korrosionsbeständigen beziehungsweise strom- und wärmeleitenden Verbindung zwischen dem Lot und den Metallen kommt.

Metalllote sind meist Legierungen, die als Lötdraht oder Lötpaste vorliegen. Sie enthalten oft bereits ein Flussmittel, welches nach dem Lötprozess oft als Rückstand auf der Lötstelle verbleibt.

Generell unterscheidet man zwischen Weich- und Hartlöten, wobei die Weichlote für das Weichlöten einen Schmelzpunkt unter 450° C und die Hartlote für das Hartlöten einen Schmelzpunkt zwischen 450° C und 1.100° C besitzen. Am weitesten verbreitet ist das Löten in der Elektrotechnik. Die Lötungen werden dort fast ausschließlich mit Weichlot ausgeführt.

Zum Löten werden grundsätzlich zwei Typen von elektrischen Lötgeräten eingesetzt, nämlich Lötkolben und Lötpistolen.

Der Lötkolben ist das klassische Lötgerät, das zum Löten von gedruckten Schaltungen verwendet wird. Im Wesentlichen handelt es sich bei dem Lötkolben um einen Griff mit einem Kabel auf der einen und einer metallischen Lötspitze auf der anderen Seite. Elektrisch verbunden ist der Lötkolben entweder mit einer Steckdose oder mit einer regelbaren Lötstation. An der Lötstation können unterschiedliche Betriebsparameter für den Lötkolben eingestellt werden. Außerdem kann die Lötstation zur Ablage des Lötkolbens dienen. Alternativ stehen heutzutage Lötkolben mit Akku- beziehungsweise Gasbetrieb zur Verfügung.

Wie es der Name bereits sagt, handelt es sich bei der Lötpistole um ein pistolenartiges Lötgerät, wobei die Lötpistole im Gegensatz zum Lötkolben eher bei groben Lötarbeiten Verwendung findet.

Heutzutage umfassen Lötkolben beziehungsweise Lötpistolen auch elektrische Sicherheitsvorrichtungen, die auf unterschiedliche physikalische Größen meist während des Lötprozesses hinweisen. Signale, vor allem Warnsignale, werden dem Anwender meist durch die mit dem Lötkolben beziehungsweise der Lötpistole verbundene Lötstation signalisiert. Insbesondere werden Temperatursensoren verwendet, um beispielsweise die Temperatur an der Lötspitze, die Temperatur des Heizelements oder auch die Temperatur im Griffbereich des Lötkolbens zu überwachen.

Weiterhin ist es bekannt, einen Lötkolben beziehungsweise eine Lötpistole mit einem Bewegungssensor auszustatten, um eine Nutzung zu detektieren. Demzufolge liegt bei derartigen Lötkolben eine Nutzung vor, wenn der Bewegungssensor eine Bewegung des Lötkolbens erkennt.

Elektrische Sicherheitsvorrichtungen, wie zum Beispiel Temperatursensoren oder Bewegungssensoren, sind grundsätzlich im Griff des Lötkolbens beziehungsweise der Lötpistole verbaut, um vor äußeren Einflüssen geschützt zu werden.

Beispielsweise offenbart die EP 0 337 065 A1 ein Verfahren zum Regeln der Betriebstemperatur eines Lötkolbens auf einen vorbestimmten Wert, wobei im Lötkolben mehrere Temperaturfühler vorgesehen sind, deren Messwerte einem Rechner zugeleitet werden, der den Heizkörper des Lötkolbens steuert.

Die DE 197 36 129 A1 betrifft eine elektrische Sicherheitsvorrichtung, insbesondere für handbetätigte Geräte, wie Bügeleisen, Lötkolben oder andere, die einen die Abschaltzeit beeinflussenden Bewegungssensor umfasst.

Die DE 10 2005 054 521 A1 beschreibt eine Lötvorrichtung zum Verlöten von Werkstücken, wobei die Lötvorrichtung einen Sensor zur Detektion einer Nutzung und/oder einer Bewegung der Lötvorrichtung als Beschleunigungssensor umfasst.

Problematisch ist bei der Verwendung von Bewegungs- beziehungsweise Beschleunigungssensoren im Lötkolben, dass diese nicht nur die eigentliche Nutzung des Lötkolbens, sondern auch unerwünschte Bewegungen aus der Umgebung wahrnehmen. Folglich ist es durchaus vorstellbar, dass selbst wenn der Lötkolben nicht genutzt wird, er durch beispielsweise Erschütterungen in der Umgebung aktivierbar ist. Vor allem in Produktionsgebäuden mit schweren Werkzeugmaschinen lassen sich Erschütterungen meist nicht verhindern. Folglich könnte eine Nutzung des Lötkolbens beziehungsweise eine Bestromung des Lötkolbens durch das Wahrnehmen von Erschütterungen aus der Umgebung ausgelöst werden. Eine Gefahr für den Anwender beziehungsweise eine Beschädigung des Lötkolbens ist dann nicht mehr auszuschließen.

Die nachveröffentlichte EP 2 196 277 A1 offenbart eine Schweiß- und Lötvorrichtung mit einem Anzeigemittel, welches als Touchscreen ausgebildet sein kann, um Betriebsparameter der Schweiß- oder Lötvorrichtung einzustellen.

US 5,495,093 A offenbart ein Lötsystem, umfassend eine Lötstation sowie einen Lötkolben. Zum Einstellen entsprechender Betriebsparameter für den Lötkolben ist eine Tastatur an der Lötstation vorgesehen, die während des Betriebs zur Schmutzabweisung mit einer Abdeckung zu Bedecken ist. Auf einem Display der Lötstation können dem Bediener die eingestellten Betriebsparameter angezeigt werden.

FR 2 839 667 A offenbart eine Plasma-Schweißvorrichtung mit einem Touchscreen zum Einstellen von Betriebsparametern.

US 6,103,994 A offenbart eine Lötstation mit einem Steuerpaneel, das zum Einstellen bestimmter Betriebsparameter als Touchscreen ausgebildet sein kann.

DE 90 05 890 U1 offenbart einen Lötkolben mit einer Sensorelektronik zum Erkennen eines Betriebszustandes des Lötkolbens.

DE 20 2004 016 921 U1 offenbart ein energiesparendes Löt- und Entlüftungssystem für Handlötplätze.

Angesichts des bekannten Stands der Technik und der zuvor ausgeführten technischen Problematik liegt der Erfindung die Aufgabe zugrunde, ein Lötsystem zur Verfügung zu stellen, das mittels Einsatzes einfacher, konstruktiver technischer Merkmale eine sichere und komfortable Einstellung von Betriebsparametern daran zulässt, wobei sich außerdem Schmutzablagerungen an oder in der Lötstation reduzieren lassen.

Die gestellte Aufgabe wird mit den Merkmalen des Anspruchs 1 gelöst.

Verbesserte Weiterbildungen sind durch die technischen Merkmale der Unteransprüche gegeben.

Die vorliegende Erfindung bezieht sich auf ein Lötsystem gemäß dem Anspruch 1. Vorteilhaft ist, dass die berührungssensitiven Tasten durch Erschütterungen der Umgebung nicht aktivierbar sind. Folglich kann eine fehlerhafte Erkennung der Benutzung des Lötkolbens umgangen werden. Die Verwendung der berührungssensitiven Tasten bietet eine zuverlässige, günstige Alternative zur Verwendung eines Bewegungs- beziehungsweise Beschleunigungssensors, um eine Benutzung des Lötsystems insbesondere des Lötkolbens zu erkennen. Schließlich bieten die berührungssensitiven Tasten eine verbesserte Robustität bei ihrer Anwendung in der Praxis, als herkömmliche Sensorik. Ermüdungserscheinungen einzelner Komponenten der berührungssensitiven Tasten sind bislang nicht bekannt.

In einer verbesserten Ausführungsform umfassen die berührungssensitiven Tasten kapazitive, resistive und/oder induktive Sensoren. Eine Verwendung entsprechender Sensoren ist vorteilhaft, weil selbst bei einer sehr ruhigen Führung des Lötkolbens eine Nutzung erkennbar ist.

In einer weiteren Ausführungsform umfasst der Lötkolben einen Handgriff mit einer Lötspitzenaufnahme, wobei der Lötkolben einen oder mehrere berührungssensitive Sensoren mit einer kapazitiven, resistiven und/oder induktiven Messelektrode umfasst, um eine Benutzung des Lötkolbens zu erkennen. Kapazitive, resistive beziehungsweise induktive Messelektroden sind vor allem vorteilhaft in einem Arbeitsumfeld, das durch Erschütterungen geprägt ist.

Vorzugsweise bildet dabei die Messelektrode eine Oberfläche des Handgriffs. Dies bietet den Vorteil, dass im Inneren des Handgriffs mehr Platz für andere Komponenten zur Verfügung steht. Außerdem lässt sich dadurch eine Benutzung des Lötkolbens reaktionsschnell erkennen.

In einer weiteren Ausführungsform ist die Messelektrode zwischen einem ersten Abschnitt und einem zweiten Abschnitt des Handgriffs angeordnet. Durch diese Anordnung ist ein angenehmes Halten des Lötkolbens gewährleistet beziehungsweise wird der Anwender auf ein ordnungsgemäßes Halten des Lötkolbens hingewiesen.

Um die Stabilität des Lötkolbens zu verbessern beziehungsweise ein schnelles und einfaches Zusammenbauen des Lötkolbens zu erleichtern, ist die Messelektrode mit dem ersten und dem zweiten Abschnitt verschraubbar. Dies bietet auch den Vorteil, dass die Komponenten im Inneren des Lötkolbens leicht zugänglich sind.

Ein ergonomisches und sicheres Halten des Lötkolbens wird begünstigt, wenn die Messelektrode zylindrisch ist. Eine zylindrische Ausführung der Messelektrode begünstigt auch ein zuverlässiges Messergebnis, um eine Nutzung des Lötkolbens zu detektieren.

Besonders zuverlässige Messergebnisse durch die berührungssensitiven Tasten beziehungsweise Sensoren sind erreichbar, wenn die Messelektrode Metall oder Graphit aufweist. Außer einem robusten Erscheinungsbild nimmt dadurch auch die Stabilität des Lötkolbens zu. Vorzugsweise ist die Messelektrode antistatisch, um eine statische Aufladung derselben zu verhindern. Dadurch ist auch die Vermeidung von Staubanziehung gegeben.

Um die Messelektrode besonders gut gegen äußere Verunreinigungen zu schützen, ist auf der Messelektrode eine Schutzschicht vorgesehen. Die Schutzschicht kann beispielsweise eine Gummierung sein, die dem Erscheinungsbild des ersten beziehungsweise des zweiten Abschnitts des Handgriffs entspricht.

Durch die Schutzschicht beziehungsweise durch die antistatische Beschaffenheit der Messelektrode lässt sich auch eine elektrostatische Entladung des Lötkolbens vorbeugen. Dadurch ist eine elektrostatische Entladung auf elektrostatisch gefährdete Bauteile nicht möglich.

In einer weiteren verbesserten Ausführungsform der Erfindung ist vorgesehen, dass die Messelektrode ein elektrisches Feld umgibt, das ein Aktivfeld mit einem Schaltabstand definiert. Eine Benutzung des Lötkolbens ist dadurch besonders zuverlässig erkennbar.

Vorzugsweise ist der Schaltabstand einstellbar. Dadurch ist es möglich, den kapazitiven Sensor zu sensibilisieren.

Ein sicherer Umgang mit dem Lötkolben wird begünstigt, wenn am Lötkolben eine Leuchte angeordnet ist, um die Benutzung des Lötkolbens zu signalisieren. Ebenfalls signalisiert die Leuchte dem Anwender, ob eine Bestromung des Lötkolbens vorliegt beziehungsweise sich der Lötkolben in einem arbeitsfähigen Zustand befindet.

Weiterhin kann die Lötspitzenaufnahme eine austauschbare Lötspitze aufnehmen. Somit lässt sich eine verbrauchte Lötspitze mühelos austauschen.

Bei einer weiteren zweckmäßigen Ausführungsform gilt, dass die berührungssensitiven Sensoren eingeschaltet sind, sobald die Lötspitze mit der Lötspitzenaufnahme verbunden ist. Dies begünstigt vor allem die Sicherheit am Arbeitsplatz, weil eine Bestromung des Lötkolbens nur bei eingesetzter Lötspitze in der Lötspitzenaufnahme zustande kommt, beziehungsweise spart Energie und beugt eine frühzeitige Abnutzung des Lötkolbens vor.

Um Energie zu sparen und um eine Beschädigung des Lötkolbens zu verhindern, kann der Lötkolben auch in einen Bereitschaftsmodus mit abgesenkter Temperatur übergehen, wenn die berührungssensitiven Sensoren die Benutzung des Lötkolbens nicht erkennen.

Alternativ dazu stoppt eine Stromversorgung des Lötkolbens, wenn die berührungssensitiven Sensoren die Benutzung des Lötkolbens nicht erkennen. Legt der Anwender den Lötkolben aus der Hand und verlässt eventuell auch noch seinen Arbeitsplatz, kann somit die Stromversorgung des Lötkolbens unterbrochen werden, wodurch die Sicherheit am Arbeitsplatz zusätzlich verbessert wird.

In einer weiteren zweckmäßigen Ausführungsform umfasst die Lötstation ein berührungssensitives Bedienpaneel. Eine derartige Kombination hat sich in der Praxis als besonders günstig erwiesen. Durch die Lötstation ist eine elektrische Versorgung des Lötkolbens je nach Anwendungsfall gewährleistet.

Falls eine Nutzung des Lötkolbens mittels der berührungssensitiven Sensorik erkennbar ist, wird vorzugsweise durch eine elektrische Verbindungsleitung ein digitales Signal an die Lötstation geschickt, durch welche dann der Lötkolben in Betrieb genommen wird. Folglich ist eine Fernsteuerung der Lötstation mit dem Lötkolben möglich.

Als nützlich erwiesen hat sich auch, wenn die Glasplatte zwischen einer vorderen und einer hinteren Antireflexionsschicht angeordnet ist. Dies erleichtert dem Anwender den Umgang mit der Lötstation.

Ein reaktionsschnelles präzises Einstellen ist erreichbar, wenn das Bedienpaneel mehrere berührungssensitive Tasten umfasst. Diese sind kostengünstig und zeigen keine Abnutzungserscheinungen.

Ausführungsformen des Erfindungsgegenstandes werden anhand der Zeichnungen erläutert. Es zeigen:
- Figur 1: einen Lötkolben, wie er beim Lötsystem der Erfindung einsetzbar ist,
- Figur 2: eine Lötstation, wie sie bei dem Lötsystem der Erfindung anwendbar ist,
- Figur 3: eine schematische Anordnung des Bedienpaneels der Erfindung, und
- Figur 4: eine vergrößerte Darstellung der Radtaste des Bedienpaneels.

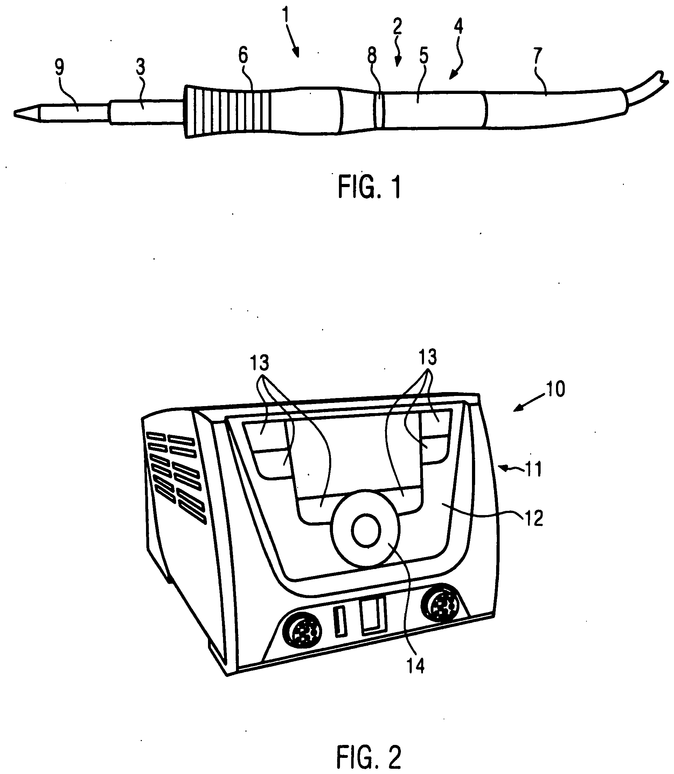

Die Figur 1 zeigt einen Lötkolben 1 gemäß der Erfindung. Der Lötkolben 1 umfasst einen Handgriff 2 mit einer Lötspitzenaufnahme 3. Des weiteren umfasst der Lötkolben 1 einen berührungssensitiven Sensor 4 mit einer Messelektrode 5. Dabei kann die Messelektrode 5 eine kapazitive, resistive beziehungsweise induktive Messelektrode sein.

Außerdem zeigt die Figur 1 einen ersten Abschnitt 6 und einen zweiten Abschnitt 7 des Handgriffs 2, zwischen denen die Messelektrode 5 angeordnet ist. Zwischen dem ersten Abschnitt 6 und dem zweiten Abschnitt 7 ist außerdem eine Leuchte 8 zu sehen. Schließlich zeigt die Figur 1 eine austauschbare Lötspitze 9, die in der Lötspitzenaufnahme 3 angeordnet ist.

Die Figur 2 zeigt eine Lötstation 10 für die Erfindung.

Zu sehen ist auch ein Bedienpaneel 11 der Lötstation 10. Das Bedienpaneel 11 ist durch eine Glasplatte 12 abgedeckt.

Auf dem Bedienpaneel 11 sind berührungssensitive Tasten 13 angeordnet, die durch kapazitive, resistive beziehungsweise induktive Messung eine Betätigung der Tasten 13 erkennen. Zusätzlich befindet sich mittig auf dem Bedienpaneel 11 eine berührungssensitive Radtaste 14.

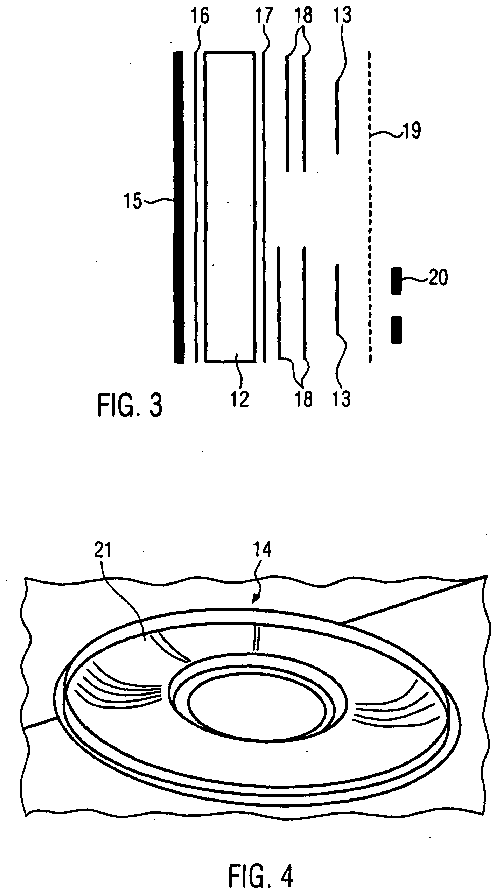

Die Figur 3 zeigt eine schematische Darstellung des Bedienpaneels 11. Die schematische Darstellung der Figur 3 zeigt eine antistatische Beschichtung 15. Die Glasplatte 12 ist zwischen einer vorderen Antireflexionsschicht 16 und einer hinteren Antireflexionsschicht 17 angeordnet. Neben der hinteren Antireflexionsschicht 17 sind Druckschichten 18 zur optischen Oberflächengestaltung angeordnet.

Neben den Druckschichten 18 zeigt die Figur 3 die kapazitiven Tasten 13. Neben den kapazitiven Tasten 13 ist eine Lackschicht 19 vorgesehen.

Schließlich zeigt die Figur 3 elektronische Bauteile 20, die neben der Lackschicht 19 angeordnet sind.

Die Figur 4 zeigt eine vergrößerte Darstellung der Radtaste 14. Die Radtaste 14 ist von der Glasplatte 12 bedeckt, wobei in der Glasplatte 12 eine Fingerführung 21 eingeformt ist.

Der Lötkolben 1 der Erfindung kann zum Fügen von metallischen Werkstoffen verwendet werden. Efindungsgemäß umfasst der Lötkolben 1 eine oder mehrere berührungssensitive Tasten beziehungsweise Sensoren mit einer Messelektrode 5, um eine Benutzung des Lötkolbens 1 zu erkennen.

Beim Löten liegt der Lötkolben 1 wie ein Stift in der Hand des Anwenders, wodurch sich besonders gut feinere Lötarbeiten durchführen lassen. Besonders gut ist der Lötkolben 1 beim Verlöten von elektronischen Bauteilen zu verwenden.

Beim Halten des Lötkolbens 1 greifen die Finger des Anwenders am ersten Abschnitt 6 des Lötkolbens 1 an. Gleichzeitig liegt der Lötkolben 1 mit seiner Messelektrode 5 zwischen dem Zeigefinger und dem Daumen des Anwenders an der Handoberfläche auf. Bei einer Berührung der Handoberfläche mit der Messelektrode 5 signalisiert der kapazitive, resistive beziehungsweise induktive Sensor 4 die Benutzung des Lötkolbens 1. Zur Bestimmung der Benutzung des Lötkolbens 1 ist die Messelektrode 5 von einem elektrischen Feld umgeben, das ein Aktivfeld mit einem Schaltabstand definiert. Der Schaltabstand kann dabei derartig eingestellt werden, dass eine Benutzung des Lötkolbens 1 auch dann erkannt wird, wenn die Hand des Anwenders nicht an der Messelektrode 5 direkt anliegt.

Ist eine Benutzung des Lötkolbens 1 erkannt, wird dem Lötkolben 1 von der Lötstation 10 Strom zugeführt, um die Lötspitze 9 auf eine voreingestellte Temperatur zu erhitzen.

Als Sicherheitsfunktion ist der Lötkolben 1 derartig ausgebildet, dass der berührungssensitive Sensor 4 nur dann eingeschaltet ist, wenn die Lötspitze 9 mit der Lötspitzenaufnahme 3 ordnungsgemäß verbunden ist. Eine Bestromung des Lötkolbens 1 findet also nur dann statt, wenn die Lötspitze 9 richtig in die Lötspitzenaufnahme 3 eingeschoben ist.

Der Lötkolben 1 kann auch in einen Bereitschaftsmodus mit abgesenkter Temperatur übergehen. Dies ist dann der Fall, wenn der Sensor 4 die Benutzung des Lötkolbens 1 nicht erkennt, beispielsweise wenn der Anwender den Lötkolben 1 zur Seite legt. Alternativ dazu wird eine Bestromung des Lötkolbens 1 ganz unterbrochen.

Zum Regeln der Funktion des Lötkolbens 1 dient die Lötstation 10. Das Bedienpaneel 11 der Lötstation 10 umfasst mehrere berührungssensitive Tasten 13, die zum Einstellen unterschiedlicher Betriebsparameter des Lötkolbens 1 zur Verfügung stehen. Geschützt ist das Bedienpaneel 11 durch eine Glasplatte 11, auf der eine antistatische Beschichtung 15 angeordnet ist. Die antistatische Beschichtung wirkt staubabweisend und verhindert somit eine Verschmutzung des Bedienpaneels 11. Ebenfalls verhindert die antistatische Beschichtung eine elektrostatische Entladung auf empfindliche Bauteile.

Um für ein verbessertes Erkennungsbild des Bedienpaneels 11 insbesondere der Tasten 13 zu sorgen, umfasst das Bedienpaneel 11 ebenfalls eine vordere und eine hintere Antireflexionsschicht 16, 17.

Zur Einstellung der Temperatur des Lötkolbens 1 beziehungsweise von anderen Betriebsparametern kann die berührungssensitive Radtaste 14 des Bedienpaneels 11 verwendet werden. Um einen einfachen Umgang bzw. ein sicheres und präzises Einstellen der Radtaste 14 zu gewährleisten, ist in der Glasplatte 12 eine muldenartige Fingerführung 21 für die Radtaste 14 eingeformt, die dem Anwender bei der Einstellung hilft.

Die Leuchte 8 kann eine LED umfassen, und signalisiert die Benutzung des Lötkolbens 1 bzw. zeigt dessen Bestromung an.

Unter Verwendung des kapazitiven Sensors 4 ist der Lötkolben 1 unempfindlich gegen Erschütterungen aus der Umgebung, das heißt eine Benutzung des Lötkolbens 1 ist nur dann erkennbar, wenn der Lötkolben 1 in der Hand des Anwenders liegt und zusätzlich die Lötspitze 9 ordnungsgemäß in der Lötspitzenaufnahme 3 angeordnet ist.

## Patentansprüche

1. Lötsystem, umfassend einen Lötkolben (1), eine Lötstation (10), und
berührungssensitive Tasten, die eine Verwendung des Lötsystems erkennen oder eine Einstellung unterschiedlicher Betriebsparameter des Lötsystems ermöglichen,
**dadurch gekennzeichnet, dass** die Lötstation (10) ein berührungssensitives Bedienpanel (11) umfasst,
dass das Bedienpanel (11) der Lötstation (10) eine Glasplatte (12) mit einer antistatischen Beschichtung (15) umfasst, sodass eine elektrostatische Entladung der Lötstation (10) auf elektrostatisch gefährdete Bauteile vermeidbar ist,
dass das Bedienpanel (11) eine berührungssensitive Radtaste (14) umfasst und dass die Glasplatte (12) eine Fingerführung (21) für die berührungssensitive Radtaste (14) umfasst.

2. Lötsystem nach Anspruch 1, **dadurch gekennzeichnet, dass** die Glasplatte (12) zwischen einer vorderen und einer hinteren Antireflexionsschicht (16, 17) angeordnet ist.

3. Lötsystem nach einem der Ansprüche 1 oder 2, **dadurch gekennzeichnet, dass** das Bedienpanel (11) mehrere berührungssensitive Tasten (13) umfasst.

4. Lötsystem nach einem der vorherigen Ansprüche, **dadurch gekennzeichnet, dass** die berührungssensitiven Tasten kapazitive, resistive und/oder induktive Sensoren (4) umfassen.

5. Lötsystem nach einem der vorherigen Ansprüche, **dadurch gekennzeichnet, dass** der Lötkolben (1) einen Handgriff (2) mit einer Lötspitzenaufnahme (3) umfasst, wobei der Lötkolben (1) einen oder mehrere berührungssensitive Sensoren (4) mit einer kapazitiven, resistiven und/oder induktiven Messelektrode (5) umfasst, um eine Benutzung des Lötkolbens (1) zu erkennen.

6. Lötsystem nach Anspruch 5, **dadurch gekennzeichnet, dass** die Messelektrode (5) eine Oberfläche des Handgriffs (2) bildet.

7. Lötsystem nach Anspruch 5 oder 6, **dadurch gekennzeichnet, dass** die Messelektrode (5) Metall oder Graphit aufweist.

8. Lötsystem nach einem der Ansprüche 5 bis 7, **dadurch gekennzeichnet, dass** die Messelektrode (5) antistatisch ist.

9. Lötsystem nach einem der Ansprüche 5 bis 8, **dadurch gekennzeichnet, dass** auf der Messelektrode (5) eine Schutzschicht vorgesehen ist.

10. Lötsystem nach einem der Ansprüche 5 bis 9, **dadurch gekennzeichnet, dass** die Messelektrode (5) ein elektrisches Feld umgibt, das ein Aktivfeld mit einem Schaltabstand definiert.

11. Lötsystem nach Anspruch 10, **dadurch gekennzeichnet, dass** der Schaltabstand einstellbar ist.

12. Lötsystem nach einem der Ansprüche 5 bis 11, **dadurch gekennzeichnet, dass** die berührungssensitiven Sensoren (4) eingeschaltet sind, sobald eine Lötspitze (9) mit der Lötspitzenaufnahme (3) verbunden ist.

13. Lötsystem nach einem der Ansprüche 5 bis 12, **dadurch gekennzeichnet, dass** eine Stromversorgung des Lötkolbens (1) unterbrochen wird, wenn die berührungssensitiven Sensoren (4) die Benutzung des Lötkolbens (1) nicht erkennen.

## Claims

1. Soldering system, comprising a soldering iron (1), a soldering station (10), and
touch-sensitive buttons that detect a use of the soldering system or allow a setting of different operating parameters of the soldering system,
**characterized in that** the soldering station (10) comprises a touch-sensitive operating panel (11),
that the operating panel (11) of the soldering station (10) comprises a glass plate (12) with an antistatic coating (15), so that an electrostatic discharge of the soldering station (10) to electrostatically sensitive components is avoidable,
that the operating panel (11) comprises a touch-sensitive rotary button (14), and that the glass plate (12) comprises a finger guide (21) for the touch-sensitive rotary button (14).

2. Soldering system according to claim 1, **characterized in that** the glass plate (12) is disposed between a front and a rear antireflection coating (16, 17).

3. Soldering system according to one of claims 1 or 2, **characterized in that** the operating panel (11) comprises several touch-sensitive buttons (13).

4. Soldering system according to one of the preceding claims, **characterized in that** the touch-sensitive buttons comprise capacitive, resistive and/or inductive sensors (4).

5. Soldering system according to one of the preceding claims, **characterized in that** the soldering iron (1) comprises a handle (2) with a soldering tip receptacle (3), wherein the soldering iron (1) comprises one or more touch-sensitive sensors (4) with a capacitive, resistive and/or inductive sensing electrode (5) for detecting a use of the soldering iron (1).

6. Soldering system according to claim 5, **characterized in that** the sensing electrode (5) defines a surface of the handle (2).

7. Soldering system according to claim 5 or 6, **characterized in that** the sensing electrode (5) includes metal or graphite.

8. Soldering system according to one of claims 5 to 7, **characterized in that** the sensing electrode (5) is antistatic.

9. Soldering system according to one of claims 5 to 8, **characterized in that** a protective coating is provided on the sensing electrode (5).

10. Soldering system according to one of claims 5 to 9, **characterized in that** the sensing electrode (5) is surrounded by an electric field defining an active field by a sensing distance.

11. Soldering system according to claim 10, **characterized in that** the sensing distance is adjustable.

12. Soldering system according to one of claims 5 to 11, **characterized in that** the touch-sensitive sensors (4) are switched on as soon as the soldering tip (9) is connected to the soldering tip receptacle (3).

13. Soldering system according to one of claims 5 to 12, **characterized in that** a power supply to the soldering iron (1) is interrupted if the touch-sensitive sensors (4) do not detect the use of the soldering iron (1).

## Revendications

1. Système de brasage comprenant un fer à braser appelé communément fer à souder (1), une station de brasage (10) et des touches à effleurement, qui permettent la reconnaissance d'une utilisation du système de brasage ou un réglage de différents paramètres du système de brasage,
**caractérisé**
**en ce que** la station de brasage (10) comprend un tableau de commande à effleurement (11),
**en ce que** le tableau de commande (11) de la station de brasage (10) comporte une plaque de verre (12) avec un revêtement antistatique (15), de sorte qu'il est possible d'éviter une décharge électrostatique de la station de brasage (10) vers des composants sensibles sur le plan électrostatique,
**en ce que** le tableau de commande (11) comporte une molette à effleurement (14), et
**en ce que** la plaque de verre (12) comporte un guidage de doigt (21) pour la molette à effleurement (14).

2. Système de brasage selon la revendication 1, **caractérisé en ce que** la plaque de verre (12) est agencée entre une couche anti-réfléchissante avant et arrière (16, 17).

3. Système de brasage selon la revendication 1 ou la revendication 2, **caractérisé en ce que** le tableau de commande (11) comporte plusieurs touches à effleurement (13) .

4. Système de brasage selon l'une des revendications précédentes, **caractérisé en ce que** les touches à effleurement comportent des capteurs (4) capacitifs, résistifs et/ou inductifs.

5. Système de brasage selon l'une des revendications précédentes, **caractérisé en ce que** le fer à braser (1) comporte une poignée (2) avec un logement porte-panne (3), le fer à braser (1) comportant un ou plusieurs capteurs à effleurement (4) avec une électrode de mesure (5) capacitive, résistive et/ou inductive, en vue de la reconnaissance d'une utilisation du fer à braser (1).

6. Système de brasage selon la revendication 5, **caractérisé en ce que** l'électrode de mesure (5) forme une surface extérieure de la poignée (2).

7. Système de brasage selon la revendication 5 ou la revendication 6, **caractérisé en ce que** l'électrode de mesure (5) présente du métal ou du graphite.

8. Système de brasage selon l'une des revendications 5 à 7, **caractérisé en ce que** l'électrode de mesure (5) est antistatique.

9. Système de brasage selon l'une des revendications 5 à 8, **caractérisé en ce que** sur l'électrode de mesure (5) est prévue une couche de protection.

10. Système de brasage selon l'une des revendications 5 à 9, **caractérisé en ce que** l'électrode de mesure (5) entoure un champ électrique, qui définit un champ actif avec une distance de commutation.

11. Système de brasage selon la revendication 10, **caractérisé en ce que** la distance de commutation est réglable.

12. Système de brasage selon l'une des revendications 5 à 11, **caractérisé en ce que** les capteurs à effleurement (4) sont en marche dès qu'une panne de brasage (9) est reliée au logement porte-panne (3).

13. Système de brasage selon l'une des revendications 5 à 12, **caractérisé en ce qu'**une alimentation en courant du fer à braser (1) est interrompue lorsque les capteurs à effleurement (4) ne reconnaissent pas l'utilisation du fer à braser (1).
